# EUROPÄISCHE PATENTSCHRIFT

(11) **EP 1 281 044 B1**
(45) Veröffentlichungstag und Bekanntmachung des Hinweises auf die Patenterteilung: **22.08.2007**
(21) Anmeldenummer: 01942973.7
(22) Anmeldetag: 27.04.2001
(51) Int. Cl.: G01C 21/36

(54) **NAVIGATIONSVERFAHREN UND -VORRICHTUNG**
NAVIGATION METHOD AND DEVICE
PROCEDE ET DISPOSITIF DE NAVIGATION

(30) Priorität: 29.04.2000 DE 10021171
(43) Veröffentlichungstag der Anmeldung: 05.02.2003
(73) Patentinhaber: ROBERT BOSCH GMBH, 70442 Stuttgart (DE)
(72) Erfinder: DUCKECK, Ralf, 31137 Hildesheim (DE)
(86) Internationale Anmeldenummer: PCT/DE2001/001587
(87) Internationale Veröffentlichungsnummer: WO 2001/084082

(56) Entgegenhaltungen:
- EP-A- 0 845 658
- EP-A- 0 943 896
- US-A- 5 862 244
- US-A- 6 028 553

## Beschreibung

### STAND DER TECHNIK

Die vorliegende Erfindung betrifft ein Navigationsverfahren und eine Navigationsvorrichtung, insbesondere zum Einsatz in Fahrzeug-Navigationssystemen.

Obwohl auf beliebige Informationssysteme mit einer von einer externen Stelle oder Zentrale an eine Vielzahl von Informationsadressaten gegebenen Informationsversorgung anwendbar, werden die vorliegende Erfindung sowie die ihr zugrunde liegende Problematik in Bezug auf ein an Bord eines Automobils befindliches Navigationssystem und dessen Kopplung an eine Verkehrsleitzentrale erläutert.

Die heutigen On-Board Navigationssysteme bestehen im wesentlichen aus folgenden Subsystemen: digitale Straßenkarte, Rechenmodul zur Fahrtroutenberechnung, Positionsbestimmungseinrichtung, Systemverwaltung, Fahrzeugsensorik zur Erkennung von Fahrzeugbewegungen, Eingabeeinheit und Ausgabeeinheit für die Bedienung und Zielführung.

Die On-Board Navigationssysteme sind in der Lage, autonom und unabhängig von einer Verkehrsleitzentrale nach der Eingabe von Start und Ziel eine nach verschiedenen Kriterien optimierte Routenplanung durchzuführen. Neuere Systeme können dabei auch digitale Verkehrsinformationen, die beispielsweise über RDS-TMC oder GSM empfangen wurden, verarbeiten und Umleitungsrouten berechnen. Ein Nachteil eines solchen hochentwickelten On-Board Systems besteht jedoch darin, daß die Umgehungsroute für eine Verkehrsstörung nicht unter Berücksichtigung der Verkehrslage auf dieser Umgehungsroute oder auf anderen Alternativrouten ermittelt werden kann. Außerdem sind solche Systeme nicht in der Lage, vorab auf eine geänderte Verkehrslage zu reagieren, die genau durch solche umgeleiteten Verkehrsströme beeinflusst wird.

Des weiteren sind sogenannte Off-Board Navigationssysteme bekannt, bei denen die Intelligenz in einer Zentrale liegt, von der die Route berechnet und an das Fahrzeug mit Hilfe von Baken oder Funktelefon (GSM) übertragen wird. Ein kombiniertes Off/On-Board Navigationssystem ist in der EP 0 814 448 offenbart. Dieses System ist dazu in der Lage, wie ein On-Board Navigationssystem selbst eine Start-Ziel-Route zu berechnen. Um jedoch bei aktuell aufgetretenen Verkehrsstörungen dem Fahrer eine möglichst günstige Ausweichroute empfehlen zu können, wird in dieser Schrift vorgeschlagen, die Start-Ziel-Route im Endgerät zu berechnen und gleichzeitig eine Route von der Zentrale anzufordern. Die Zentrale berechnet dann die Route unter Berücksichtigung der aktuellen Verkehrslage und geänderten Verkehrszuständen, wie sie etwa durch eine besondere Verkehrsführung wegen Baustellen, etc. vorhanden sein kann. Wenn die Route in der Zentrale berechnet ist, so wird "prognostiziert", wie weit der Nutzer in der Zwischenzeit gefahren ist, und es wird ihm dann die vollständige Restroute bis zu seinem Ziel in das Endgerät übermittelt.

Dieses Verfahren ist ein sogenanntes Hybridverfahren, da es die Vorgehensweise von On-Board Systemen mit der von Off-Board Systemen kombiniert. Es hat jedoch den Nachteil, daß unter Umständen sehr große Datenmengen übertragen werden müssen, was bei vielen Nutzern des Systems zu einer starken Belastung des Funknetzes (GSM) führen kann und zudem hohe Übermittlungskosten in Form von Mobilfunkgebühren verursacht. Ursächlich dafür ist, daß die vollständige Restroute, beginnend mit dem derzeitigen Fahrzeugstandort und endend mit dem einprogrammierten Ziel, über das Mobilfunknetz übermittelt wird. Eine derart starke Belastung des Funknetzes kann im schlimmsten Fall zu einer erheblichen Verzögerung bei der Übertragung der Daten sowie zu einer Überlastung des Übertragungskanals führen.

### VORTEILE DER ERFINDUNG

Das erfindungsgemäße Verfahren mit den Merkmalen des Anspruchs 1 und die entsprechende Vorrichtung gemäß Anspruch 4 weisen gegenüber den bekannten Lösungsansätzen den Vorteil auf, daß die Funknetzbelastung in erheblichem Maße reduziert wird.

In den Unteransprüchen finden sich vorteilhafte Weiterbildungen und Verbesserungen des jeweiligen Gegenstandes der Erfindung.

Erfindungsgemäß wird vorgeschlagen, die für eine optimierte Routenplanung notwendigen Daten, die von einer Verkehrsleitzentrale an ein Kraftfahrzeug-Navigationssystem übertragen werden müssen, auf ein geringeres Maß zu reduzieren. Es werden im wesentlichen nur diejenigen Informationen übermittelt, die für die Befahrung eines alternativen Streckenabschnitts der Route erforderlich sind. Diese Informationen stellen Abweichungen von der im Kraftfahrzeug-Navigationssystem berechneten Route dar und werden daher im folgenden als Delta-Informationen bezeichnet. Aufgrund dieser Maßnahme bleibt die gesamte zu übertragende Datenmenge auch bei einer hohen Anzahl von Nutzern relativ gering, und die Kosten für den Einzelnen bleiben niedrig.

Die der vorliegenden Erfindung zugrunde liegende Idee besteht also im wesentlichen darin, nur die tatsächlich benötigten Informationen über das Mobilfunknetz zu senden und darüber hinaus die an Bord des Fahrzeugs vorhandenen Rechenresourcen zum Berechnen von Routen effizient auszunutzen.

Im Gegensatz zu reinen Off-Board Verfahren muß gemäß einem Aspekt der vorliegenden Erfindung, wenn die Verkehrslage ruhig und ohne Störungen verläuft, überhaupt keine Datenübertragung zwischen Verkehrsleitzentrale und Fahrzeug-Navigationssystem stattfinden, wogegen die reinen Off-Board Systeme alle Routen-Informationen vom Start bis zum Ziel übermitteln müssen.

Gemäß einer bevorzugten Weiterbildung gibt das Fahrzeug-Navigationssystem zum Anstoßen einer optimierten Routenplanung die momentane Fahrzeugposition, das Ziel der Route und gewisse Datenbankversions-Informationen an die Verkehrszentrale. Aus diesen Informationen kann die Zentrale schließen, mit welchen aktuellen und möglicherweise auch zukünftig auftretenden Verkehrsstörungen für einen individuellen Nutzer des Systems zu rechnen ist. Die Datenbankversions-Informationen geben der Verkehrszentrale. Aufschluß darüber, welche Datenbank-Informationen bezüglich der verschiedenen Routenabschnitte lokal im Fahrzeug abrufbar sind und dort autonom verarbeitet werden können. Dieses Minimum an Information ist ausreichend, um wirksam und schnell die benötigten Informationen an das Fahrzeug-Navigationssystem senden zu können.

Das erfindungsgemäße Verfahren kann gemäß einem weiteren Aspekt jedoch auch zum gezielten Lenken eines Verkehrsstroms aus Kraftfahrzeugen ausgenutzt werden. Hierbei werden Informationen von einer Verkehrsleitzentrale an an Bord der Kraftfahrzeuge befindliche Fahrzeug-Navigationssysteme zum Zwecke einer Vermeidung von Verkehrsstörungen übermittelt, wobei bei Vorhandensein einer Verkehrsstörung und einer Mehrzahl an zumutbaren Ausweichstrecken der Verkehrsstrom geschickter Weise auf nicht nur eine, sondern auf diese Mehrzahl an Ausweichstrecken gezielt verteilt werden kann.

Gemäß einer solchen Weiterbildung kann die Verkehrszentrale innerhalb gewisser Grenzen verkehrslenkend eingreifen, da nicht alle Fahrzeuge über die selbe Umgehungsroute geführt werden müssen, sondern alle möglichen, zumutbaren Ausweichstrecken praktisch gleichmäßig gefüllt werden können. Dies könnte beispielsweise dadurch realisiert werden, dass irgendein Merkmal der Benutzerkennung des Benutzers als Auswahlkriterium aufgegriffen wird. Wenn eine Benutzerkennung beispielsweise aus Zahlen besteht, so könnte beispielsweise deren Endziffer zur Unterscheidung der Benutzer und zur gezielten Umleitung in eine der Mehrzahl von Teilstrecken ausgenutzt werden. Oder bei Endziffern zwischen 0 und 3 könnte eine Umgehungsstrecke A diesem Benutzerkreis vorgeschlagen werden, läge sie zwischen 4 und 6, könnte eine entsprechende andere Umgehungsstrecke B, und sonst eine Strecke C vorgeschlagen werden. Selbstverständlich sind andere Möglichkeiten möglich, den Benutzerkreis einzuteilen.

### ZEICHNUNGEN

Ausführungsbeispiele der Erfindung sind in den Zeichnungen dargestellt und in der nachfolgenden Beschreibung näher erläutert.

### Es zeigen:

- Fig. 1: ein schematisches Blockdiagramm mit den für das erfinderische Verfahren wesentlichen Schritten während der Fahrt gemäß einem bevorzugten Ausführungsbeispiel,
- Fig. 2: eine Prinzipskizze mit den wesentlichen funktionalen Elementen, die am erfinderischen Verfahren beteiligt sind, und
- Fig. 3: einen schematischen Strassenkartenausschnitt.

### BESCHREIBUNG DER AUSFÜHRUNGSBEISPIELE

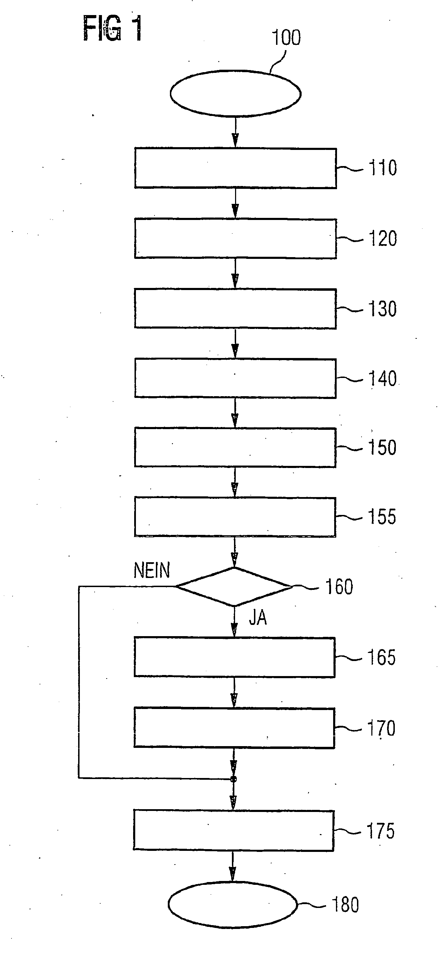

Fig. 1 zeigt ein schematisches Blockdiagramm mit den für das erfinderische Verfahren gemäß einem bevorzugten Ausführungsbeispiel wesentlichen Schritten während der Fahrt.

In einem Schritt 100 startet der Benutzer das Navigationssystem bei Antritt seiner Fahrt.

In einem Schritt 110 gibt er das Fahrziel ein. Danach bestimmt das Fahrzeug-Navigationssystem die aktuelle Position des Fahrzeugs, Schritt 120. In einem Schritt 130 werden dann vom System die Präferenzparameter des Benutzers eingelesen, daß heißt. es wird festgestellt, ob der Benutzer die schnellste Route oder beispielsweise die kürzeste Route entlang geleitet werden möchte. In diesem Falle wählt der Benutzer die schnellste Route.

In einem Schritt 140 berechnet das On-Board Navigationssystem autonom mit den im Kraftfahrzeug vorhandenen Ressourcen, wie etwa den Verkehrsnetz-Bestandsdaten z.B. von einer Datenbank, die auf einer CD gespeichert ist und einem Rechner die vom Benutzer gewünschte Route.

Dann wird in einem Schritt 150 die Fahrzeugposition, dessen Ziel, die Präferenzparameter und eine Versionskenn-Nummer, die die aktuelle Version der Bestands-Datenbank des Kraftfahrzeug-Navigationssystems kennzeichnet, an die nächstliegende Verkehrsleitzentrale übertragen.

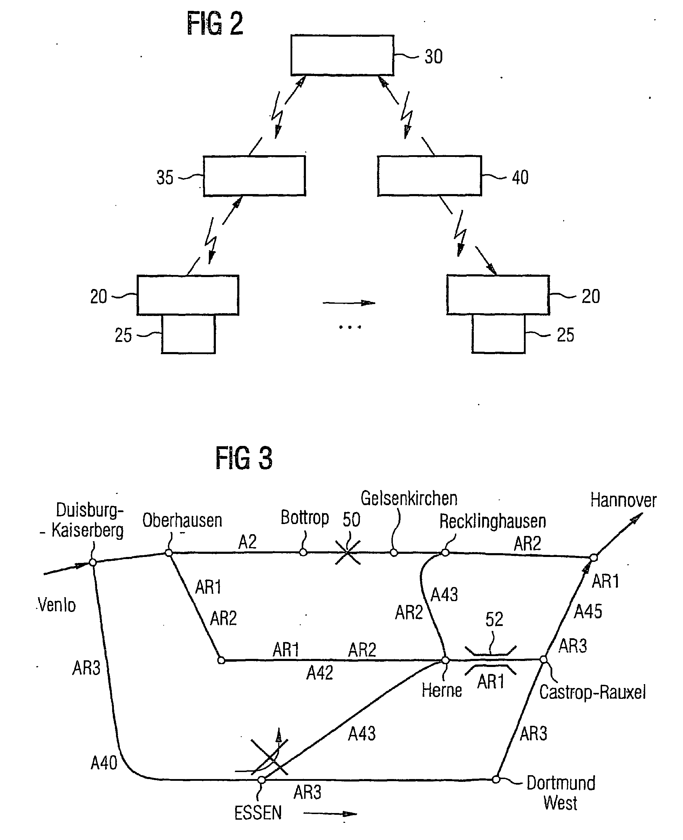

An dieser Stelle wird auf Fig. 2 gleichzeitig Bezug genommen. Fig. 2 zeigt eine Prinzipskizze mit den wesentlichen funktionalen Elementen, die am erfinderischen Verfahren beteiligt sind. Im linken Teil von Fig. 2 ist das Kraftfahrzeug mit Bezugszeichen 20 abgebildet. Es besitzt ein Navigationssystem 25. Die oben genannte Zentrale ist mit Bezugszeichen 30 eingezeichnet.

Die in Schritt 150 mittels mobiler Funkkommunikation übertragenen Daten, enthaltend Position, Ziel, Präferenzparameter und Software-Versionsnummer, sind in Fig. 2 als Minimuminfo und mit Bezugszeichen 35 bezeichnet.

Mit Bezug zurück zu Fig. 1 wird nun in einem Schritt 155 in der Zentrale 30 die Route für das Kraftfahrzeug 20 unter Einbeziehung eventueller Verkehrsstörungen berechnet.

Wenn keine Störungen vorhanden sind, die zum momentanen Zeitpunkt oder in naher Zukunft für das Kraftfahrzeug 20 relevant sein können, siehe Nein-Zweig in Entscheidung 160, so wird vorverzweigt zu Schritt 175, in dem dann die Fahranweisungen aus den vom Navigationsgerät 25 berechneten Bord-Daten an den Fahrer ausgegeben werden, bis das Ziel erreicht ist. In einem Schritt 180 ist dann das Verfahren beendet.

Sollte jedoch in der Zentrale 30 eine Verkehrsstörung registriert sein, die für die geplante Fahrt des Kraftfahrzeugs 20 im entsprechenden Zeitfenster relevant sein könnte, siehe Ja-Zweig von Entscheidung 160, so wird eine Ausweichstrecke zur Umgehung der Störung in der Zentrale 30 berechnet, und bestimmte, die Umgehungsstrecke der Störung definierende Daten werden für eine Übertragung an das Kraftfahrzeug zusammengestellt. Diese sogenannten Delta-Daten oder Delta-Informationen kennzeichnen die Umgehungsstrecke so vollständig, daß das an Bord des Kraftfahrzeugs 20 befindliche Navigationssystem 25 daraus Fahranweisungen an den Fahrer synthetisieren kann, damit dieser die Umgehungsstrecke befahren kann.

Die Delta-Daten werden dann in einem Schritt 170 an das Kraftfahrzeug 20 übertragen. Die Delta-Daten sind in Fig. 2 mit Bezugszeichen 40 versehen. Das links beziehungsweise rechts in Fig. 2 dargestellte Kraftfahrzeug soll ein und dasselbe Kraftfahrzeug darstellen. Da es sich jedoch zwischen Schritt 150 und Schritt 170 bewegt, siehe zurück zu Fig. 1, sind zwei Kfz 20 dargestellt.

In einem Schritt 175 werden dann die Fahranweisungen, die das Kraftfahrzeug-Navigationssystem 25 aus den Delta-Daten 40 gewonnen hat, an den Fahrer ausgegeben, so lange bis die Ursprungsroute beziehungsweise das originäre Ziel der Fahrt erreicht ist. Dabei sollte angemerkt werden, daß nach Wiedereinlenken in die Ursprungsroute, daß heißt nach Abfahren der vollständigen Umgehungsstrecke, das Fahrzeug-Navigationssystem den Fahrer wieder autonom und unabhängig von der Zentrale weiter leitet. Dann kann in weiterem Verlauf der Route die selbe oder eine andere Verkehrszentrale erneut für eine mögliche Aktualisierung der Fahrstrecke nach dem selben Prinzip, wie es in Fig. 1 und Fig. 2 dargestellt ist; eingebunden werden.

Mit ergänzendem Bezug zu Fig. 3, die einen schematischen Strassenkartenausschnitt darstellt, wird das Verfahren gemäß einem bevorzugten Ausführungsbeispiel im folgenden konkret anhand einer bestimmten Verkehrssituation beschrieben.

Ein Fahrzeug bewegt sich aus Richtung Venlo kommend in Richtung Hannover, wobei der tatsächliche Start- und Ziel-Punkt in diesem Beispiel nicht relevant ist.

Die optimale Route bei Einstellung der 'schnellsten' Route führt hierbei ab Autobahnkreuz Duisburg-Kaiserberg über die A2. Bei einer Vollsperrung 50 der A2 zwischen Bottrop und Gelsenkirchen wäre eine mögliche Alternativroute AR1 für ein autonomes Navigationsgerät ab Autobahnkreuz Oberhausen über die A42 bis Autobahnkreuz Castrop-Rauxel und dann über die A45 zurück auf die A2.

Die zuständige verkehrsleitzentrale weiß allerdings, daß auf der A42 vor Castrop-Rauxel eine Baustelle 52 eingerichtet ist, die zwar bisher nicht zu Behinderungen führt, aber unter Umständen in Kürze aufgrund erhöhten Verkehrsaufkommens dazu führen könnte. Daher werden an das Fahrzeunavigationssystem gewisse Delta-Informationen für eine Alternativroute AR2 übertragen, aus denen das Fahrzeugnavigationssystem durch Lesen und ggf. weiterer Bearbeitung dieser Informationen vorschlagen kann, entlang einer Alternativroute AR 2 ab Autobahnkreuz Oberhausen über die A42 bis Autobahnkreuz Herne zu fahren, und dann über die A43 nach Recklinghausen zurück auf die A2.

Sollte auf diesem Streckenabschnitt bereits zuviel Verkehr sein, könnte ein Teil geleitet werden, wie beschrieben und ein anderer Teil entlang einer Alternativroute AR3 bereits ab Autobahnkreuz Duisburg-Kaiserberg über die A40 bis Autobahnkreuz Dortmund-West und dann über die A45 zurück auf die A2, das heißt, gerade nicht ab Autobahnkreuz Essen über die A43 nach Recklinghausen, da sonst der Verkehr ja bei der Baustelle 52 und auf der A43 zwischen Herne und Recklinghausen zu dicht würde.

Je mehr Fahrzeuge mit solchen Systemen ausgerüstet sind, in desto besser durchgreifendem, wirksamen Umfang wäre dann auch eine verkehrslenkende Beeinflussung durch die Zentrale möglich.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise können die vom Kraftfahrzeug an die Zentrale oder die von der Zentrale ans Kraftfahrzeug übermittelten Daten zusätzlich noch nach einem gängigen Verfahren komprimiert werden, um die zu übertragende Datenmenge noch weiter zu reduzieren.

Das erfinderische Verfahren ist auch in vielen Stufen schachtelbar, in dem Sinne, dass beispielsweise bei einer zweistufigen Schachtelung die Delta-Daten für eine von der primären Hauptroute wegführende, tertiäre Ausweichroute für eine bereits vorgeschlagene sekundäre Ausweichroute durchgegeben und verarbeitet werden können.

## Patentansprüche

1. Navigationsverfahren, bei dem eine Route in einem an Bord eines Kraftfahrzeugs (20) befindlichen Fahrzeug-Navigationssystem (25) berechnet wird und bei dem Informationen von einer Zentrale (30) an das FahrzeugNavigationssystem (25) zum Zwecke einer optimierten Routenplanung übermittelt werden, **gekennzeichnet durch** den Schritt, nur die für die Befahrung eines alternativen Streckenabschnittes der Route erforderlichen, notwendigen Abweichungen von der vorberechneten Route darstellenden Delta-Informationen (40) bei Vorliegen einer Störung auf der vorberechneten Route von der Zentrale an das Fahrzeug-Navigationssystem (25) zu übermitteln, wobei die Delta-Informationen (40) eine Umgehungsstrecke der Störung definieren.

2. Navigationsverfahren nach Anspruch 1, den Schritt enthaltend, zum Anstoßen einer optimierten Routenplanung die momentane Fahrzeugposition, das Ziel der Route und Datenbankversions-Informationen an die Zentrale (30) zu senden.

3. Navigationsverfahren nach einem der vorhergehenden Ansprüche, bei dem die Delta-Informationen (40) von der Zentrale (30) an mehrere, sich Bord von Kraftfahrzeugen (20) befindlichen Fahrzeug-Navigationssystemen (25) zum Zwecke einer Vermeidung von Verkehrsstörungen zum gezielten Lenken eines Verkehrsstroms aus Kraftfahrzeugen derart übermittelt werden, dass bei Vorhandensein einer Verkehrsstörung und einer Mehrzahl an zumutbaren Ausweichstrecken der Verkehrsstrom auf die Mehrzahl von Ausweichstrecken (AR1, AR2, AR3) gezielt verteilt wird.

4. Fahrzeug-Navigationssystem, eingerichtet zum Durchführen des Navigationsverfahrens nach einem der vorstehenden Ansprüche.

5. Programm zum Einsatz in einer Verkehrsleitzentrale (30), enthaltend zum Durchführen des Navigationsverfahrens nach einem der vorhergehenden Ansprüche geeigneten Programmcode.

## Claims

1. Navigation method in which a route is calculated in a vehicle navigation system (25) onboard a motor vehicle (20) and in which information is transmitted from a control centre (30) to the vehicle navigation system (25) for the purpose of optimized route planning, **characterized by** the step of transmitting from the control centre to the vehicle navigation system (25) only the delta information (40) which is required for travelling on an alternative road section on the route and which shows necessary deviations from the precalculated route when there is a disruption on the precalculated route, the delta information (40) defining a bypass road for the disruption.

2. Navigation method according to Claim 1, containing the step of initiating optimized route planning by sending the current vehicle position, the route's destination and database version information to the control centre (30).

3. Navigation method according to one of the preceding claims, in which the delta information (40) is transmitted from the control centre (30) to a plurality of vehicle navigation systems (25) onboard motor vehicles (20) for the purpose of avoiding traffic disruptions, in order to purposefully direct a stream of traffic comprising motor vehicles, such that when there is a traffic disruption and there are a plurality of reasonable alternative roads the stream of traffic is purposefully distributed over the plurality of alternative roads (AR1, AR2, AR3).

4. Vehicle navigation system, set up to carry out the navigation method according to one of the preceding claims.

5. Program for use in a traffic control centre (30), containing a program code which is suitable for carrying out the navigation method according to one of the preceding claims.

## Revendications

1. Procédé de navigation, selon lequel on calcule un itinéraire dans un système de navigation de véhicule (25) situé à bord d'un véhicule automobile (20), à partir d'informations transmises d'une centrale (30) au système de navigation de véhicule (25) en vue d'une planification optimisée de l'itinéraire,
**caractérisé par**
l'étape consistant à transmettre de la centrale au système de navigation de véhicule (25) seulement les informations Delta (40) représentant les déviations nécessaires par rapport à l'itinéraire préalablement calculé, exigées pour parcourir une partie de trajet en variante de l'itinéraire, en cas de perturbation sur l'itinéraire préalablement calculé, les informations delta (40) définissant un trajet de contournement de la perturbation.

2. Procédé de navigation selon la revendication 1, comprenant l'étape consistant à envoyer à la centrale (30) la position momentanée du véhicule, le but de l'itinéraire et les informations de la version de la banque de données, afin de déclencher une planification optimisée de l'itinéraire.

3. Procédé de navigation selon l'une des revendications précédentes, dans lequel les informations Delta (40) sont transmises de la centrale (30) à plusieurs systèmes de navigation de véhicules (25) situés à bord de véhicules automobiles (20) en vue d'éviter des perturbations du trafic afin de diriger correctement un flux de trafic de véhicules automobiles de sorte que, en présence d'une perturbation du trafic et d'une pluralité de trajets de déviation possibles, le flux de trafic soit réparti de manière adéquate sur la pluralité de trajets de déviation (AR1, AR2, AR3).

4. Système de navigation de véhicule, conçu pour réaliser le procédé de navigation selon l'une des revendications précédentes.

5. Programme d'utilisation dans une centrale de commande du trafic (30), contenant un code de programme approprié pour réaliser le procédé de navigation selon l'une des revendications précédentes.
